# EUROPEAN PATENT APPLICATION

(11) **EP 4 492 096 A1**
(43) Date of publication of application: **15.01.2025**
(21) Application number: 23184659.3
(22) Date of filing: 11.07.2023
(51) Int. Cl.: G01S 17/894, G01S 7/4863

(54) **METHOD FOR DETERMINING A RESOLUTION AND IMAGE CAPTURE SYSTEM**

(71) Applicant: Lightcode Photonics OÜ, 50411 Tartu (EE)
(72) Inventor: Valdmann, Andreas, 50411 Tartu (EE); Valtna, Heli, 50411 Tartu (EE); Bogdanov, Jan, 50411 Tartu (EE); Omelkov, Sergey, 50411 Tartu (EE); Kaimre, Hans Daniel, 50411 Tartu (EE)
(74) Representative: Flach Bauer & Partner Patentanwälte mbB

(57) **Abstract**

A method for determining a resolution for acquiring a three dimensional image of a scene (S) has the following steps:
a. for a chosen first 2D pixel pattern (38), receiving depth information for the pixels of the first 2D pixel pattern (38) including information with respect to the presence of objects (40, 42, 44) of the scene (S) in the field of view of a respective pixel, and
b. depending on the depth information, determining the number and arrangement of pixels of a second 2D pixel pattern (46) to be used to subsequently acquire a three dimensional image of the scene (S),
wherein the second 2D pixel pattern (46) comprises a higher pixel density in at least one region with a plurality of objects (40, 42, 44) present.

Further, a control unit (14) and an image capture system (10) are shown.

## Description

The invention concerns a method for determining a resolution for acquiring a three dimensional image of a scene, a control unit for controlling an image capture device as well as an image capture system.

Three dimensional images of scenes are widely used for autonomously controlling machines in dynamically changing environments. Most notably, in autonomous driving, vehicles use three dimensional images of the traffic and the traffic scene around them for driving decisions.

To acquire three dimensional images, specialized image capture devices are needed, for example time-of-flight cameras.

An increase in the resolution of these three dimensional images increases the information available to the control system of the machine, e.g. the vehicle, and thus the process performance.

As the resolution of image capture devices that are capable of capturing three dimensional images is still limited, methods are known to increase the resolution computationally, for example single pixel imaging (SPI) or computational ghost imaging (CGI).

These methods, however, decreased the frame rate of the image capture device, which is problematic in highly dynamic situations, like traffic.

It is therefore an object of the invention to provide a method, a control unit and an image capture system that allow to increase the resolution of the three dimensional image with reduced losses in frame rate.

For this purpose, a method for determining a resolution for acquiring a three dimensional image of a scene is provided. The method comprises the following steps:
a. for a chosen first 2D pixel pattern having a plurality of pixels, receiving depth information for the pixels of the first 2D pixel pattern, the depth information including information with respect to the presence of objects of the scene in the field of view of a respective pixel of the first 2D pixel pattern, and
b. depending on the depth information, determining the number and arrangement of pixels of a second 2D pixel pattern to be used to subsequently acquire a three dimensional image of the scene.

The second 2D pixel pattern comprises a higher pixel density than the first 2D pixel pattern in at least one region of a pixel of the first 2D pixel pattern associated with depth information indicating a plurality of objects in the field of view of the respective pixel.

By increasing the pixel density in regions of interests, i.e. regions having a plurality of objects in the field of view of the respective pixel, the same amount of relevant information is included in a three dimensional image based on this 2D pixel pattern than in a three dimensional image having an overall higher pixel density. However, the acquisition time and image reconstruction complexity for such a three dimensional image based on the second 2D pixel pattern is drastically reduced.

The depth information may be received in form of a three dimensional image of the scene based on the first 2D pixel pattern.

Three dimensional image may be voxel map. The three dimensional image may include, besides the depth information of the 2D pixel pattern, further information, like color information, from a second sensor.

For example, one 2D pixel pattern or a plurality of 2D pixel patterns are used for acquiring the three dimensional image. In case of a plurality of 2D pixel patterns, each 2D pixel pattern is treated separately.

In an aspect, for determining the number and arrangement of pixels of a second 2D pixel pattern, the number of objects in the field of view of the pixels in the first 2D pixel pattern is determined based on the associated depth information.

It is conceivable that a single object having a region located at different depths with respect to the image capture device is regarded as multiple objects.

In an embodiment, the second 2D pixel pattern comprises a lower pixel density than the first 2D pixel pattern in at least one region of a plurality of pixels of the first 2D pixel pattern, if the depth information associated with the plurality of pixels indicate the absence of objects in the field of view of the plurality of pixels or the presence of the same object in the field of view of the plurality of pixels. This way, the acquisition time and image reconstruction complexity can be reduced further or kept constant.

In an aspect, the higher pixel density is achieved by using a plurality of substitute pixels in the second 2D pixel pattern instead of the respective pixel of the first 2D pixel pattern, wherein the pixels of the plurality of pixels in the second 2D pixel pattern are smaller than the respective pixel in the first 2D pixel pattern, in particular wherein the plurality of substitute pixels of the second 2D pixel pattern cover the same area in the second 2D pixel pattern as the respective pixel of the first 2D pixel pattern has done in the first 2D pixel pattern. By using substitute pixels that replace the pixel in the first 2D pixel pattern, the remaining pattern remains unchanged, simplifying the method.

In order to avoid adapting the image reconstruction algorithm or any analysis of the acquired image, the total number of pixels of the first 2D pixel pattern and the total number of pixels of the second 2D pixel pattern may be the same.

It is conceivable that the total number of pixels of the first 2D pixel pattern and the total number of pixels of the second 2D pixel pattern are different from one another, allowing to optimize performance in any given situation.

In particular, the total number of pixels is kept below a predefined upper limit.

In an embodiment, the depth information includes depth data values corresponding to the measured distance to objects in the field of view of a respective pixel of the first 2D pixel pattern, wherein the number and arrangement of pixels of the second 2D pixel pattern is determined based on the depth data values, allowing an efficient determination of the second 2D pixel pattern.

In particular, within this disclosure, the "distance" or "depth" is to be understood with respect to image capture device, unless otherwise stated.

For simplifying the process further, for the pixels of the first 2D pixel pattern, the number of peaks in the depth data values corresponding to a respective pixel may be detected, in particular wherein the number and arrangement of pixels of the second 2D pixel pattern is determined based on the determined number of peaks, one or more characteristics of the peaks and/or a comparison of characteristics of the peaks, for example the height of the peaks, the difference in height of the peaks, the area under the peaks, the difference in the areas under the peaks, the position of the maximum of the peaks, and/or the depth distance between the peaks.

The depth distance between the peaks is to be understood with respect to the depth direction.

For example, the peaks in the data values corresponding to a single pixel are evaluated, in particular for each of the pixels separately.

The number of peaks may be regarded as a presence of the same number of objects in the field of view.

In an embodiment, for one pixel of the first 2D pixel pattern, a plurality of substitute pixels is used in the second 2D pixel pattern, if more than one peak in the depth data values of the respective pixel of the first 2D pixel pattern is detected, effectively and accurately increasing the pixel density in a region of interest.

For example, a peak may be regarded as a peak, if at least one characteristic of the peak (e.g. height, area under the curve), is higher or lower than the predefined threshold. It is conceivable that the threshold could be calculated based on the parameters of all the peaks in all the pixels in the 2D pixel pattern.

Alternatively or in addition, for a plurality of neighboring pixels of the first 2D pixel pattern, a single pixel in the second 2D pixel pattern is used, if the depth data values of the respective plurality of pixels of the first 2D pixel pattern do not have a peak or the depth distance between the peaks of the neighboring pixels is smaller than a threshold or smaller than the depth distance between the peaks of neighboring pixels of another plurality of pixels. This way, the pixel density in regions with large uniform objects is reduced without losing relevant information.

The threshold may be fixed or dynamically adjusted.

In order to reach the optimal resolution, another iteration of the method steps, in particular steps a and b, may be performed using the second 2D pixel pattern as the first 2D pixel pattern, in particular iterations are repeated until for no pixel of the first 2D pixel pattern the associated depth information indicates a plurality of objects in the field of view of the respective pixel.

In an embodiment an initial 2D pixel pattern is used as the first 2D pixel pattern for a first iteration of the method steps, in regular intervals and/or for recovery, in particular the initial 2D pixel pattern contains only a single pixel or a regular grid of same sized pixels. This way, optimal starting conditions can be chosen which may be used to reset the 2D pixel patterns. Using the initial 2D pixel pattern for recovery may be necessary in cases that the algorithm has converged into a local minimum that does not correspond to the desirable 2D pixel pattern for resolving the objects in the scene. The initial 2D pixel pattern provides a recovery from this state as it restarts the algorithm. To minimize the effect of such convergent behavior, the initial 2D pixel pattern may be used in regular intervals, thus restarting the algorithm.

For example, the depth information for a specific pixel of the first 2D pixel pattern is a distance distribution, e.g. a histogram of the time-of-flight of light detected at the respective pixel, or the signal strength values of a voxel map along the depth axis corresponding to the respective pixel, providing reliable information on the distance of an object.

Within this disclosure, a distance distribution is to be understood as a distribution of a variable that correlates with the distance to the object, for example a photon time-of-flight histogram, a reflected light pulse intensity distribution, a photodetector output intensity over arrival time distribution (e.g. as an oscillogram), a spectrum of reflected FMCW chirp, etc..

It is conceivable that the number and arrangement of pixels of the second 2D pixel pattern is determined by a machine learning module receiving the depth information, in particular a trained artificial neural network.

In an embodiment, the method further comprises the step of transmitting a control signal to an image capture device and/or at least one component of the image capture device, instructing acquisition of a three dimensional image of the scene based on the second 2D pixel pattern, assuring that the subsequent three dimensional image is based on the second 2D pixel pattern.

In an aspect, the three dimensional image of a scene is acquired by capturing a sequence of three-dimensional subimages by an image capture device, wherein for capturing the subimages, a sensor of the image capture device is exposed to light from the scene in a sequence of various exposure patterns, wherein the three dimensional image is obtained by combining the sequence of subimages by a controller of the image capture device with respect to the sequence of exposure patterns, in particular wherein the sequence of exposure patterns is adapted for acquiring different subimages and/or the three dimensional image based on the second 2D pixel pattern.

In particular for the acquisition of each subimage, a different exposure pattern is used.

The exposure patterns may be predefined, in particular for the acquisition of the entire three dimensional image. In one embodiment, the exposure patterns may be adapted for the acquisition of a subset of subimages or even for the acquisition of each subimage.

For example, at least one exposure pattern blocking all light except in the at least one region with a higher pixel density is added to the sequence of exposure patterns.

For above mentioned purpose, a control unit for controlling an image capture device is further provided, the control unit being configured to carry out a method as described above.

The features and advantages discussed with respect to the method also apply to the control unit and vice versa.

The control unit may include a machine learning module, in particular a trained artificial neural network.

Further, for above mentioned purpose, an image capture system for acquiring a three dimensional image of a scene is provided, the system comprising a control unit as described above and an image capture device with a sensor.

The features and advantages discussed with respect to the method and/or the control unit also apply to the image capture system and vice versa.

The image capture device may comprise a separate controller or the control unit is also the controller of image capture device.

The image capture system is in particular configured to carry out a method as described above.

In an embodiment, the sensor of the image capture device comprises a plurality of hardware pixels, wherein one of the 2D pixel patterns covers all hardware pixels of the sensor, a plurality of the hardware pixels of the sensor or only a single one of the hardware pixels of the sensor, providing a versatile and optimal increase in resolution of the hardware pixels.

For example, if one 2D pixel pattern covers only a plurality of the hardware pixels or only a single one of the hardware pixels, the respective second 2D pixel pattern is determined individually for each plurality of hardware pixels or for each hardware pixel, respectively.

One hardware pixel may comprise or consist of one or more micropixels. A micropixel is to be understood, for example, as the smallest sensor area of the sensor that may produce output individually, e.g. by a dedicated wiring and/or detector.

For example, one micropixel may be one SPAD (single photon avalanche diode), one photodiode, one avalanche photodiode, or one of another type of light-sensitive semiconductor or element.

In another embodiment, the image capture device comprises an illumination unit for illuminating the scene with light, wherein the image capture device is configured as a time-of-flight camera, in particular wherein the illumination unit is configured to illuminate the scene using a sequence of illumination patterns generating a sequence of exposure patterns at the sensor, allowing for precise measurements of the depth of objects.

Alternatively or in addition, the image capture device may comprise a light modulation device, in particular a digital micromirror device or LCD-matrix, configured to partially or fully block light incoming from the scene using a sequence of blocking patterns generating a sequence of exposure patterns at the sensor, reducing the complexity of the illumination unit.

It is also conceivable that the sensor acts as a light modulation device by combining the outputs of a plurality of its micropixels pixels into a combined signal output being a hardware pixel, effectively generating an exposure pattern. By changing how the outputs of the plurality of its micropixels are combined, i.e. which micropixels are active, a sequence of exposure patterns is generated, already being part of the hardware pixels. Such a sensor and method for operation are known and are disclosed, for example, in WO 2022/224037A1, which is incorporated herein by reference.

For example, the outputs of all micropixels that are active within a single hardware pixel are connected together into a single output. In particular, the information of which particular micropixel produced a signal within the hardware pixel is considered irrelevant and discarded within the sensor even if it was available to it.

Further features and advantages will be apparent from the following description as well as the accompanying drawings, to which reference is made. In the drawings:
- Fig. 1: shows an image capture system according to an embodiment of the invention with a control unit according to an embodiment of the invention,
- Fig. 2: shows a full set of exposure patterns used for acquiring a three dimensional image,
- Fig. 3: shows in a very enlarged view several hardware pixels of a sensor of the image capture system of Figure 1 with indicated 2D pixel patterns,
- Fig. 4: shows a schematic flowchart of a method according to an embodiment of the invention,
- Figs. 5, 6: show a first and a second 2D pixel pattern, respectively, for carrying out the method of Figure 4,
- Fig. 7-11: show a series of 2D pixel patterns with continuously increasing resolution according to an embodiment of a method according to the invention.

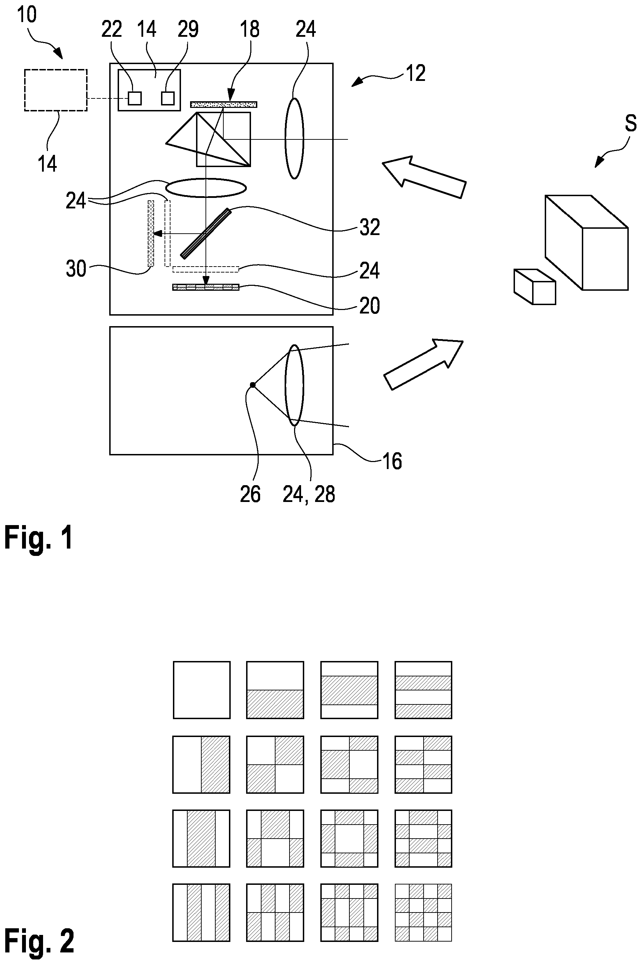

Figure 1 shows an image capture system 10 for acquiring three-dimensional images of a scene S. The image capture system 10 comprises an image capture device 12 and a control unit 14.

The image capture device 12 comprises different components, namely an illumination unit 16, a light modulation device 18, a sensor 20 as well as a controller 22.

The image capture device 12 further comprises optical elements 24 like lenses or filters.

The illumination unit 16 comprises a light source 26 and an optical element 28 for directing the light emitted by the light source 26 onto the scene S.

At the receiving section of the image capture device 12, the light modulation device 18 is arranged, for example behind an optical element 24. The light that passes through the light modulation device 18 propagates to the sensor 20.

The light modulation device 18 is shown as a digital micromirror device (DMD). Other light modulation devices 18, like an LCD matrix, may also be used.

The light modulation device 18 receives the light reflected or emitted from the scene S and guides the light towards the sensor 20. The light modulation device 18 is configured to spatially modulate the light incoming from the scene S, for example partially or fully blocking the light by selectively obscuring sections of the cross section of the beam path.

In case of a DMD, each mirror is controlled to either reflect the light towards the sensor 20 or deflect the light to not reach the sensor 20. In this way, the light modulation device 18 is configured to create blocking patterns of the incoming light which, in turn leads to different exposure patterns at the sensor 20.

The controller 22 is electrically connected to the sensor 20, the light modulation device 18 as well as the illumination unit 16 for controlling these components.

The controller 22 controls the illumination unit 16 and the sensor 20 in a way that the image capture device 12 is configured as a time-of-flight camera.

The controller 22 further controls the exposure pattern at the sensor 20, e.g. by controlling the blocking pattern of the light modulation device 18.

The blocking patterns and with that the exposure patterns are exemplary depicted in Figure 2, showing a full set of Walsh-Hadamard exposure or blocking patterns.

In a different aspect, it is further conceivable that the exposure pattern at the sensor 20 is generated by the illumination unit 16.

In this case, the illumination unit 16 is configured to illuminate the scene only partly using a sequence of illumination patterns. The illumination patterns illuminated the scene S only partially, which in turn leads to the fact that the light collected by the image capture device 12, i.e. impinging at the sensor 20, shows these patterns, thus achieving exposure patterns as explained above.

It is also conceivable that the exposure pattern is generated by the sensor 20 itself. The sensor 20 may combine the outputs of a plurality of its micropixels into a combined signal output, each combined signal output constituting one hardware pixel 34, effectively creating a larger exposed area corresponding to an exposed area of an exposure pattern.

In the shown embodiment, one hardware pixel 34 may consist of one or more micropixels. A micropixel is to be understood, for example, as the smallest sensor area of the sensor that may produce output individually, e.g. by a dedicated wiring and/or detector. For example, one micropixel may be one SPAD (single photon avalanche diode), one photodiode, one avalanche photodiode, or one of another type of light-sensitive semiconductor or element.

In the sensor 20, all micropixels that are chosen to be active within a single hardware pixel 34 are connected together into a single output, and the information of which particular micropixel produced a signal within the hardware pixel 34 is considered irrelevant and discarded within the sensor 20 even if it was available to it.

By changing the micropixels whose outputs are combined, i.e. choosing which micropixels are active, different exposure patterns may be generated. Such a sensor and method for operation are known and disclosed, for example, in WO 2022/224037A1, which is incorporated by reference.

It is also conceivable that the outputs of the various micropixels are combined in several outputs, allowing to capture different subimages corresponding to different exposure patterns at once.

The control unit 14 is integrated into the image capture device 12. For example, the control unit 14 is part of the controller 22 or vice versa. The control unit 14 may also be separate from the image capture device 12, e.g. located on a different device or even in a cloud (indicated in dashed lines in Figure 1).

The control unit 14 is configured to control the image capture device 12 or the components of it.

The control unit 14 may comprise a machine learning module 29, in particular a trained artificial neural network.

In the shown embodiment, the image capture device 12 further comprises a second sensor 30 and a light separation device 32 located in the beam path between the light modulation device 18 and the sensor 20.

The second sensor 30 may be a CCD camera or the like for capturing 2D pictures of the scene, preferably in high-resolution.

The light separation device 32 is configured to separate the incoming light. It is, for example, a beam splitter or light separation device 32 separates the incoming light based on properties of the light, for example its wavelength or polarization. In the shown embodiment, the light separation device 32 is a dichroic mirror transmissive for a wavelength range including the wavelength of the light source 26.

Due to this set up, light from the scene S can be imaged with two sensors 20, 30 while, at the same time, the sensors 20, 30 are coaxial to one another, i.e. avoiding any parallax effects.

In the shown embodiment, the controller 22 may also be connected to the second sensor 30 receiving the images captured by the second sensor 30.

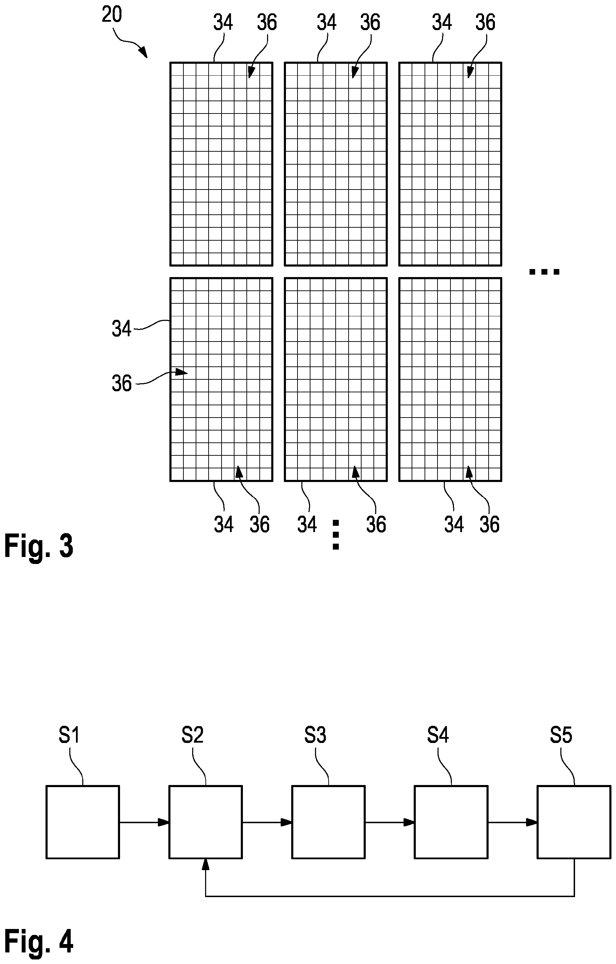

As indicated in Figure 3, the sensor 20 comprises a plurality of hardware pixels 34, wherein only six hardware pixels 34 are shown in Figure 3.

In the case of Figure 3, each hardware pixel 34 corresponds to one micropixel. The hardware pixels 34 may be the combined output of one or more micropixels.

Each hardware pixel 34 generates an electric signal based on the intensity of the light impinging on the respective micropixel(s). The signal is received by the controller 22.

The resolution of a sensor 20 with hardware pixels 34 may be increased by techniques like computational ghost imaging (CGI) or a single pixel imaging (SPI). These techniques are based on illuminating the hardware sensor 20, a single hardware pixel 34 or a micropixel for a plurality of times using a sequence of exposure patterns, for each exposure pattern a three-dimensional subimage is captured by the sensor 20. After the subimages of a full set of exposure patterns is acquired, the actual image is computed by the controller 22, the actual image having a higher resolution than the hardware resolution of the sensor 20.

To this end, the exposure patterns may be a full pattern set, e.g. a Walsh-Hadamard illumination pattern set, a Fourier illumination pattern set or variations of these. Using the compressive sensing technique, a full pattern set is not necessary to derive the actual image.

An example of this technique is described in WO 2022/112360 by the applicant which is incorporated by reference herein.

The technique of CGI or SPI also applies to the depth information of the scene S so that by this method the resolution of the image capture device 12, e.g. the time-of-flight camera is increased.

Based on the time-of-flight measurements, the controller 22 thus generates a three-dimensional image of the scene S based on the specific pixel patterns 36. Thus for the two dimensional area of the sensor 20, for each pixel in all of the pixel patterns 36 used, depth information is provided, yielding a three dimensional image of the scene S with a resolution higher than the resolution provided by the hardware pixels 34. The resolution of the three dimensional image of the scene is, in particular, a tiling of the various 2D pixel patterns provided the hardware pixels 34.

It is conceivable, that the image capture device 12 is not configured as a time-of-flight camera but obtains depth information of the scene in other ways. For example, the image capture device 12 may also be configured as an optical coherence tomography (OCT) device, a frequency modulated continuous wave (FMCW) imaging device (e.g. lidar or radar), or a chromatic confocal microscopy device.

The three dimensional image generated by the controller 22 may be a voxel map having a depth direction and the longitudinal and transverse direction spanning the area of the sensor 20 being divided into pixels by the 2D pixel patterns 36.

Further, the three dimensional image may comprise a distance distribution, for example a time-of-flight histogram for each of the pixels of the 2D pixel patterns 36. The distance distribution may be a distribution of a variable that correlates with the distance to the object, for example the photon time-of-flight histogram, a reflected light pulse intensity distribution, a photodetector output intensity over arrival time distribution (e.g. as an oscillogram), a spectrum of reflected FMCW chirp, etc..

Thus, the pixels of the three dimensional image acquired this way do not exactly correspond to a specific hardware pixel 34 of the sensor 20 but share a hardware pixel 34 of the sensor 20 with other pixels.

In this regard, they may be regarded as "virtual" but the pixels have properties very similar to that of actual hardware pixels or micropixels, like a specific field of view. Within this disclosure the term "pixel" refers to those "virtual" pixels if not indicated otherwise.

Thus, each hardware pixel 34 is the source of a plurality of pixels spatially distributed over the area of the respective hardware pixel 34. These pixels are arranged across the sensing area of the hardware pixel 34 in a twodimensional pixel pattern 36 (2D pixel pattern).

The number and arrangement of the pixels in the 2D pixel patterns 36 may be chosen freely. In the example of Figure 3, each hardware pixel 34 is associated with a separate 2D pixel pattern 36, i.e. one 2D pixel pattern 36 covers only a single one of the hardware pixels 34.

In the example shown in Figure 3, the 2D pixel patterns 36 are pixel patterns with a regular grid of same sized pixels.

It is also conceivable that a single 2D pixel pattern 36 covers a plurality of hardware pixels 34 or even that only one 2D pixel pattern 36 is provided, covering all hardware pixels 34 of the sensor 20.

For dynamically adapting the resolution of the acquired three dimensional image, the control unit 14 is configured to carry out a method as described below.

Each of the 2D pixel patterns 36 is evaluated and changed individually from the other 2D pixel patterns 36 as described below. For the ease of discussion, in the following, the case of a single 2D pixel pattern 36 covering a single hardware pixel 34 of the sensor 20 is discussed, without limiting the generality of the idea.

Figure 4 shows a flowchart of a method for determining and adapting the resolution of the acquired three dimensional image of the scene S.

The scene S may be, for example a traffic scene, e.g. comprising several cars at different distances, buildings, signs and so on.

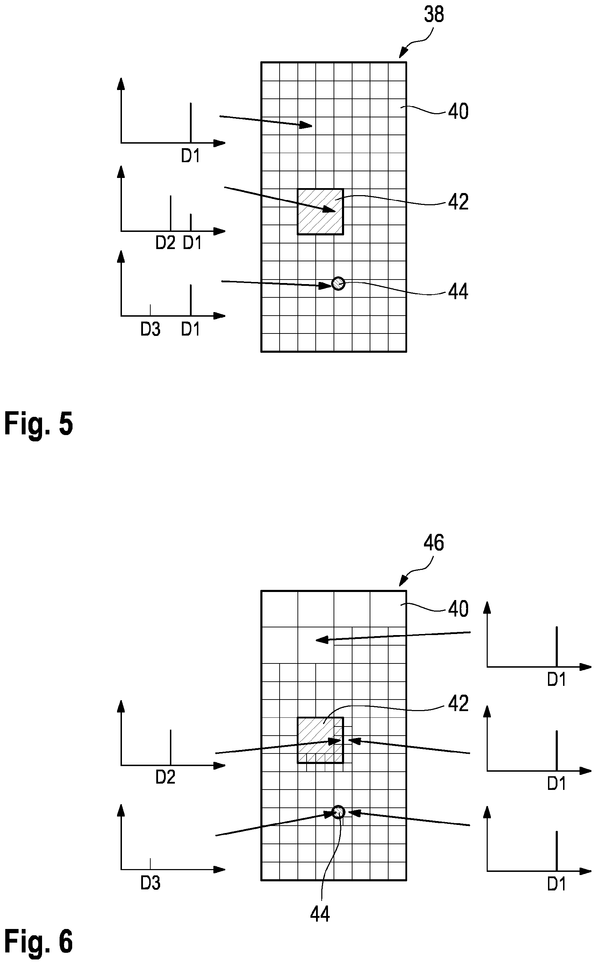

In a first step S 1 an initial 2D pixel pattern is chosen. In the example shown in Figures 5 and 6, the initial 2D pixel pattern is a regular grid of same sized pixels, here 8 x 16 pixels.

This 2D pixel pattern covers a single one of the hardware pixels 34 and is described exemplarily in the following, as mentioned above.

The initial 2D pixel pattern is then used as a first 2D pixel pattern 38 to acquire a three dimensional image of the scene S.

The three dimensional image of the scene is acquired using CGI, SPI or a related technique. A sequence of subimages is captured by the sensor 20, wherein for each of the subimages a different exposure pattern of the sequence of exposure patterns or a plurality of exposure patterns of the sequence of exposure patterns is used.

The sequence of subimages is then combined by the controller 22 taking into account the respective exposure patterns used for each subimages for generating the actual three dimensional image of the scene S.

In step S2, the control unit 14 receives the acquired three dimensional image of the scene S based on the first 2D pixel pattern 38.

The three dimensional image includes depth information for each of the pixels of the first 2D pixel pattern 38. Figure 5 shows an illustration of a single hardware pixel 34 and the associated first 2D pixel pattern 38 with which the scene S has been captured.

The scene S comprises three objects at different distances from the image capture device 12, namely: a first object 40 being a wall at a distance D1 furthest away from the image capture device 12 and covering the entire field of view of the first 2D pixel pattern 38; a second object 42 (indicated in dashed lines) being rectangular and located at a distance D2 located roughly in the middle of the first 2D pixel pattern 38 and spreading across a plurality of pixels; and a third object 44 (shown in dashed lines) being circular and located at a distance D3 from the image capture device 12 below the second, rectangular object 42.

The circular object 44 is closest to the image capture device 12.

The depth information received for three of the pixels is also shown in Figure 5 on the left hand side, wherein the associated pixels are identified by the arrows leading to the respective pixel.

In the shown embodiment, the depth information is a histogram of the time-of-flight of the light detected by the respective pixel as the distance distribution. Thus, for each pixel a distance distribution is provided.

It is also conceivable that the depth information is the signal strength values of a voxel map along the depth axis corresponding to the respective pixel located in the plane of the hardware pixel 34/micropixel.

The depth information thus includes depth data values corresponding to the measured distances D1, D2, D3 to the objects 40, 42, 44 in the field of view of a respective pixel.

For each of the pixels of the first 2D pixel pattern 38, the number of objects is determined in the field of view of the respective pixel. In the shown embodiment, this is done by determining the number of peaks in the depth data values. The number of peaks is thus regarded as a presence of the same number of objects.

In the example of Figure 5, concerning the uppermost distance distribution, only the first object 40, i.e. the wall, is present in the field of view. Thus, the depth data values have only one peak at distance D1 indicating the presence of only one object.

In the field of view of the pixel associated with the middle distance distribution, the depth data values have two peaks, one at distance D1 and that a second, higher one at distance D2, indicating the presence of two objects in the field of view of this particular pixel. In the field of view of this particular pixel, the second object 42 is present, but only partly. The remaining field of view detects the first object 40, i.e. the wall.

Thus, it is determined by the control unit 14 that two objects are present in the field of view of the respective pixel. Even though the rectangular object 42 may be a protrusion of the wall 40, and thus forming a single physical object with the wall 40, objects 40 and 42 are regarded as multiple objects due to the difference in depth.

Concerning the bottom distance distribution, two peaks are present in the depth data values, namely a large peak at distance D1 (the wall) and a small peak at distance D3, due to the third object 44. Thus, two objects for this pixel are detected by the control unit 14.

In the next step S4, the number and arrangement of pixels of a second 2D pixel pattern 46 is determined. The second 2D pixel pattern 46 shall be used to acquire a three dimensional image subsequently.

Figure 6 shows the second 2D pixel pattern 46 and the three dimensional image acquired using it.

Comparing Figures 5 and 6, it can be seen that the pixels of the first 2D pixel pattern 38 having multiple objects in their field of view have been split up into four smaller substitute pixels, each.

At the same time, some of the pixels having only one object (in the shown embodiment the first object 40) have been combined to form a single, larger substitute pixel in the second 2D pixel pattern 46.

Thus, the second 2D pixel pattern 46 comprises a higher pixel density in a region of pixels of the first 2D pixel pattern 38 having more than one object in the field of view and, at the same time, a lower pixel density in regions where only a single, similar object is present in the field of view of a plurality of neighboring pixels of the first 2D pixel pattern 38.

In the shown embodiment, the number and arrangement of the pixels in the second 2D pixel pattern 46 is determined based on the number of peaks, one or more characteristics of the peaks and/or a comparison of characteristics of the peaks, for example, the height of the peaks, the difference in height of the peaks the area under the peaks, the difference in the areas under the peaks, the position of the maximum of the peaks, and/or the distance between the peaks in the depth information of each of the pixels of the first 2D pixel pattern 38.

For example, each of the pixels having more than one peak in the associated depth information is substituted by four substitute pixels in the second 2D pixel pattern 46, wherein the four substitute pixels cover the same area of the hardware pixel 34 than the substituted pixel in the first 2D pixel pattern 38 had done. In the shown embodiment of Figures 5 and 6, this has been the case for the pixels associated with the middle and bottom distance distribution of Figure 5 and similar pixels.

It is conceivable that a pixel to be substituted may be substituted by any other number of pixels than four, for example by two, three, nine, or sixteen.

At the same time, as it is the case for the pixels associated with the uppermost distance distribution of Figure 5, neighboring pixels of the first 2D pixel pattern 38 have been combined to form a single, larger substitute pixel in the second 2D pixel pattern 46.

In the shown embodiment, if the depth data values of a plurality of neighboring pixels have a single peak and the depth distance between the peaks of neighboring pixels is small, e.g. below a threshold, it is assumed that the same single object is present in the field of view of this plurality of pixels so that a single pixel suffices to identify this object.

The threshold for the depth distance maybe predefined or set dynamically.

As can be seen in Figure 6, in the first row and in half of the second row of the second 2D pixel pattern 46, larger substitute pixels are used instead of a plurality of four neighboring pixels (having formed a square) that had been present in the first 2D pixel pattern 38.

It is also conceivable that neighboring pixels without any peaks, i.e. indicating the absence of objects in the field of view of the respective pixel, are combined in the second 2D pixel pattern 46.

Thus, in comparison to the first 2D pixel pattern 38, the number and arrangement of pixels of the second 2D pixel pattern 46 is such that six pixels of the first 2D pixel pattern 38 have been divided into four smaller pixels each. At the same time, six groups/plurality of four pixels in the first 2D pixel pattern 38, that had been forming a square each, each have been each combined into a single, larger substitute pixel in the second 2D pixel pattern 46.

In doing so, the total number of pixels in the second pixel pattern 46 remains the same as the total number of pixels of the first 2D pixel pattern 38. In this way, the number of exposure patterns for acquiring a three dimensional image remains constant and with that the acquisition time. Further, the image reconstruction complexity does not change as well, simplifying the entire process of capturing the three dimensional image.

In order to keep the total number of pixels of the 2D pixel patterns constant, metrics are applied to determine which pixels to split up and which pixels to combine.

For example, to prioritize the pixels to be split up, pixels of which the corresponding depth data values have peaks with a small difference in height are divided with higher priority and pixels having depth data values with peaks with a large difference in height are divided with a lower priority.

Similarly, for the combination of a plurality of pixels, the distance of the peaks in depth direction is used. The one of the plurality of pixels with only one peak is combined first for which the pixels have a single peak and the peaks have the smallest distance in depth direction.

It is conceivable that steps S3 and/or S4 are carried out by a machine learning module 29 of the control unit 14 which receives the depth information as an input, in particular a trained artificial neural network. For example, the output is the second 2D pixel pattern.

Then, in step S5, the control unit 14 transmits a control signal to the image capture device 12 or to the components of the image capture device 12 to acquire a three dimensional image based on the second 2D pixel pattern 46.

To this end, some or all of the exposure patterns of the sequence of exposure patterns are adapted to the second 2D pixel pattern 48 to capture the three dimensional image.

The second three dimensional image then comprises depth information for each of the pixels of the second 2D pixel pattern 46, as indicated in the distance distributions shown in Figure 6.

Each of the distance distributions of Figure 6 shows only a single peak meaning that the field of view of each of the pixels contains only one object. Thus, the optimal resolution for acquiring the three dimensional image of the scene S is achieved.

In the next iteration of the method, the second 2D pixel pattern 46 is used as the first 2D pixel pattern 38 and the steps S2, S3, S4 and S5 are repeated.

In the shown example, as no pixels with more than one object in the field of view are present, no adaption of the number and arrangement of pixels for the following 2D pixel patterns is necessary.

It is conceivable that after a predefined number of iterations, the initial 2D pixel pattern is used as the first 2D pixel pattern to avoid artifacts.

Similarly, the initial 2D pixel pattern may be used for recovery, if artifacts in the 2D pixel patterns are detected.

By this method, the resolution for acquiring a three dimensional image, i.e. the pixel density of the 2D pixel pattern used to acquire the three dimensional image, is optimized with respect to accuracy in regions of interest, e.g. regions having a transition between different objects. At the same time, processing and acquisition time is kept small due to a reduced pixel density in regions with no transitions between objects.

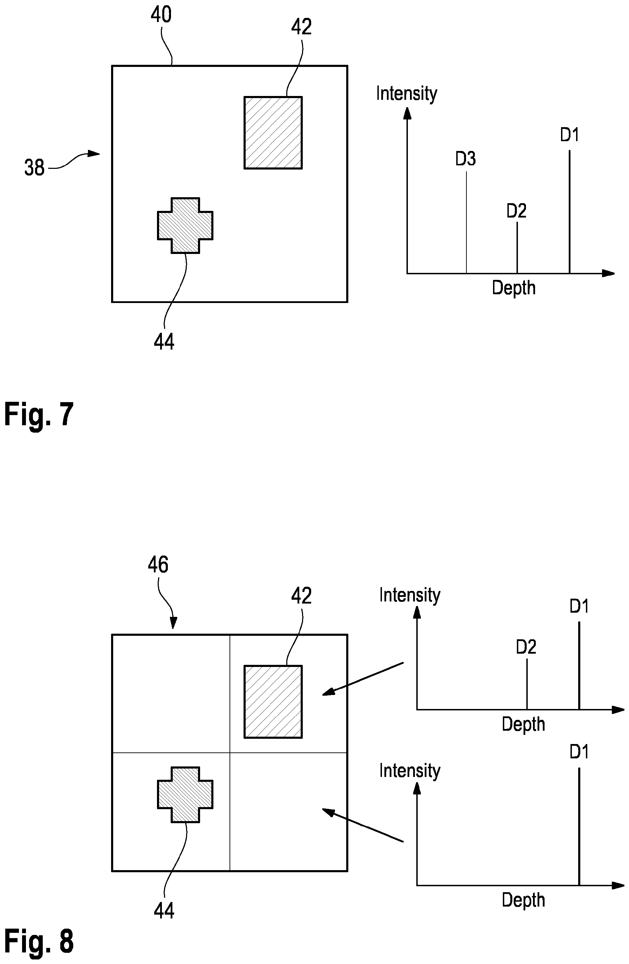

Figures 7 to 11 show 2D pixel patterns and associated distance distributions acquired while carrying out a method according to a second embodiment of the invention.

The method according to the second embodiment of the invention substantially corresponds to the first embodiment so that only the differences are discussed in the following and the same and functionally the same items are labeled with the same reference signs.

The scene S in the shown example also comprises three objects, namely: the first object 40, also being a wall, at a distance or depth D1 to the image capture device 12; a second object 42, being a rectangular object at a second depth D2; and a third object 44 having a cross shape and being located at the third depth D3 to the image capture device 12.

In the second embodiment, the initial 2D pixel pattern contains only a single pixel as shown in Figure 7 (step S 1).

The single distance distribution is acquired as the depth information in the first iteration of the method, i.e. with the initial pixel pattern as the first 2D pixel pattern 38. The depth information is received by the control unit 14 (step S2). The distance distribution is shown in on the right-hand side of Figure 7.

The distance distribution includes three peaks and the control unit 14 thus determines the presence of more than one object in the field of view of this single pixel (step S3).

In this second embodiment, each pixel having more than one object in the field of view is divided into a plurality of smaller substitute pixels in the subsequent 2D pixel pattern (step S4), for example into four pixels having only 1/4 of the size of the substituted pixel.

Thus, as the distance distribution indicates the presence of three objects in the field of view of the single pixel, it is determined that the single pixel of the first 2D pixel pattern 38 is substituted by four substitute pixels in the second 2D pixel pattern 46, as shown in Figure 8.

It is to be noted that the total number of pixels of the second 2D pixel pattern 46 is different, i.e. larger, than the total number of pixels of the first 2D pixel pattern 38.

It is conceivable that the total number of pixels of the 2D pixel patterns is kept below a predefined upper limit in order to set a limit on the acquisition time and image reconstruction complexity.

Then, in step S5, the control unit 14 instructs the image capture device 12 to capture a three dimensional image based on the second 2D pixel pattern 46.

In the next iteration of the method, steps S2 to S5 are carried out again. The control unit 14 receives the acquired three dimensional image, depicted in Figure 8. In Figure 8, only two of the four distance distributions of the three dimensional image are shown.

The second 2D pixel pattern 46 is now considered to be the first 2D pixel pattern 38 and the method steps S3, S4 and S5 are carried out.

It is thus determined that the upper left-hand and the lower right-hand pixel only have one peak and thus only one object in the field of view. It is therefore not necessary to increase the pixel density in the area of these pixels. Thus, for the subsequent second 2D pixel pattern 46 (which may be regarded as the third 2D pixel pattern), the upper left-hand and lower right-hand pixel remain unchanged.

In contrast, the upper right-hand and the lower left-hand pixel still have two objects in their field of view, as determined based on the depth information. Thus, these pixels are substituted by four, even smaller substitute pixels in the subsequent second 2D pixel pattern 46.

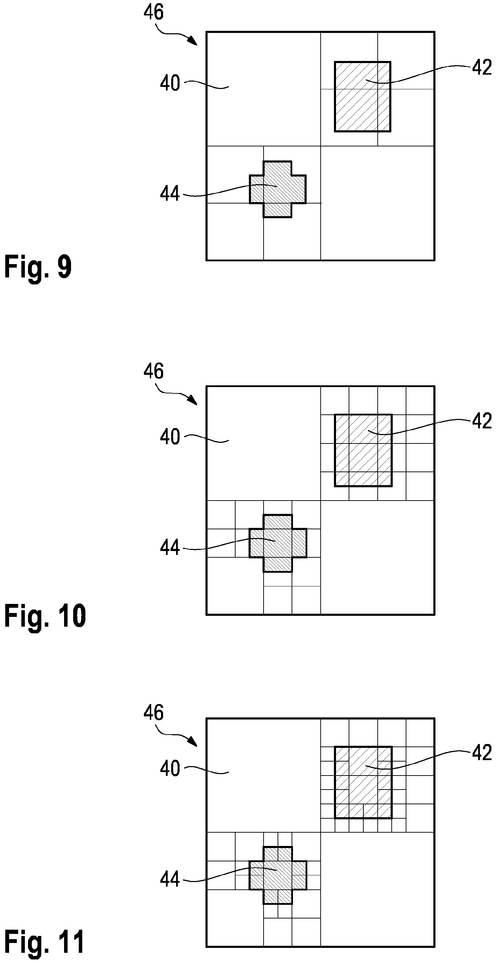

That subsequent second 2D pixel pattern 46 is shown in Figure 9, which forms the basis for the next iteration of the method.

Still, pixels exist having more than one object within the field of view so that the method is iterated again. In the shown example, two more iterations of splitting up pixels even further are needed, depicted in Figures 10 and 11.

When carrying out step S3 on the three dimensional image shown in Figure 11, it is determined that the depth information for none of the pixels of the 2D pixel pattern indicates more than one object in the field of view so that the optimal resolution is found and the subsequent 2D pixel pattern is unchanged.

The method according to the second embodiment may be faster than the one of the first embodiment, as the time for acquiring the subsequent three dimensional images is less than in the first method. This is due to the fact that the number of pixels of the 2D pixel patterns is, at least in the beginning, very low (e.g. one, four, ...), necessitating a sequence of exposure patterns much shorter than for a large amount of pixels.

Further, for acquiring the subsequent three dimensional image based on the second 2D pixel pattern 46, the sequence of exposure patterns used for acquiring the three dimensional image based on the first 2D pixel pattern 38 may be enlarged only by exposure patterns transmitting light in the region of interest (i.e. the region in which a higher pixel density is indicated), wherein the remaining areas are obscured.

This way, the sequence of exposure patterns necessary to acquire the three dimensional image based on the second 2D pixel pattern 46 is kept very small.

## Claims

1. Method for determining a resolution for acquiring a three dimensional image of a scene (S), the method comprising the following steps:
a. for a chosen first 2D pixel pattern (38) having a plurality of pixels, receiving depth information for the pixels of the first 2D pixel pattern (38), the depth information including information with respect to the presence of objects (40, 42, 44) of the scene (S) in the field of view of a respective pixel of the first 2D pixel pattern (38), and
b. depending on the depth information, determining the number and arrangement of pixels of a second 2D pixel pattern (46) to be used to subsequently acquire a three dimensional image of the scene (S),
wherein the second 2D pixel pattern (46) comprises a higher pixel density than the first 2D pixel pattern (38) in at least one region of a pixel of the first 2D pixel pattern (38) associated with depth information indicating a plurality of objects (40, 42, 44) in the field of view of the respective pixel.

2. Method according to claim 1, **characterized in that** the second 2D pixel pattern (46) comprises a lower pixel density than the first 2D pixel pattern (38) in at least one region of a plurality of pixels of the first 2D pixel pattern (38), if the depth information associated with the plurality of pixels indicate the absence of objects (40, 42, 44) in the field of view of the plurality of pixels or the presence of the same object (40, 42, 44) in the field of view of the plurality of pixels.

3. Method according to claim 1 or 2, **characterized in that** the higher pixel density is achieved by using a plurality of substitute pixels in the second 2D pixel pattern (46) instead of the respective pixel of the first 2D pixel pattern (38), wherein the pixels of the plurality of pixels in the second 2D pixel pattern (46) are smaller than the respective pixel in the first 2D pixel pattern (38), in particular wherein the plurality of substitute pixels of the second 2D pixel pattern (46) cover the same area in the second 2D pixel pattern (46) as the respective pixel of the first 2D pixel pattern (38) has done in the first 2D pixel pattern (38), and/or
that the total number of pixels of the first 2D pixel pattern (38) and the total number of pixels of the second 2D pixel pattern (46) are the same or that the total number of pixels of the first 2D pixel pattern (38) and the total number of pixels of the second 2D pixel pattern (46) are different from one another.

4. Method according to any of the preceding claims, **characterized in that** the depth information includes depth data values corresponding to the measured distance to objects (40, 42, 44) in the field of view of a respective pixel of the first 2D pixel pattern (38), wherein the number and arrangement of pixels of the second 2D pixel pattern (46) is determined based on the depth data values.

5. Method according to claim 4, **characterized in that** for the pixels of the first 2D pixel pattern (38), the number of peaks in the depth data values corresponding to a respective pixel is detected, in particular wherein the number and arrangement of pixels of the second 2D pixel pattern (46) is determined based on the determined number of peaks, one or more characteristics of the peaks and/or a comparison of characteristics of the peaks, for example the height of the peaks, the difference in height of the peaks, the area under the peaks, the difference in the areas under the peaks, the position of the maximum of the peaks, and/or the distance between the peaks.

6. Method according to claim 5, **characterized in that** for one pixel of the first 2D pixel pattern (38), a plurality of substitute pixels is used in the second 2D pixel pattern (46), if more than one peak in the depth data values of the respective pixel of the first 2D pixel pattern (38) is detected.

7. Method according to claim 5 or 6, **characterized in that** for a plurality of neighboring pixels of the first 2D pixel pattern (38), a single substitute pixel in the second 2D pixel pattern (46) is used, if the depth data values of the respective plurality of pixels of the first 2D pixel pattern (38) do not have a peak or the depth distance between the peaks of the neighboring pixels is smaller than a threshold or smaller than the depth distance between the peaks of neighboring pixels of another plurality of pixels.

8. Method according to any of the preceding claims, **characterized in that** another iteration of the method steps is performed using the second 2D pixel pattern (46) as the first 2D pixel pattern (38), in particular iterations are repeated until for no pixel of the first 2D pixel pattern (38) the associated depth information indicates a plurality of objects in the field of view of the respective pixel; and/or
that an initial 2D pixel pattern is used as the first 2D pixel pattern (38) for a first iteration of the method steps, in regular intervals and/or for recovery, in particular the initial 2D pixel pattern contains only a single pixel or a regular grid of same sized pixels.

9. Method according to any of the preceding claims, **characterized in that** the depth information for a specific pixel of the first 2D pixel pattern (38) is a distance distribution being a distribution of a variable that correlates with the distance to the object, in particular a histogram of the time-of-flight of light detected at the respective pixel, or the signal strength values of a voxel map along the depth axis corresponding to the respective pixel.

10. Method according to any of the preceding claims, **characterized in that** the method comprises the following further step:
transmitting a control signal to an image capture device (12) and/or at least one component of the image capture device (12), instructing acquisition of a three dimensional image of the scene (S) based on the second 2D pixel pattern (46).

11. Method according to any of the preceding claims, **characterized in that** the three dimensional image of the scene (S) is acquired by capturing a sequence of three dimensional subimages by an image capture device (12), wherein for capturing the subimages, a sensor (20) of the image capture device (12) is exposed to light from the scene (S) in a sequence of various exposure patterns, wherein the three dimensional image is obtained by combining the sequence of subimages by a controller (22) of the image capture device (12) with respect to the sequence of exposure patterns, in particular wherein the sequence of exposure patterns is adapted for acquiring different subimages and/or the three dimensional image based on the second 2D pixel pattern (46).

12. Control unit for controlling an image capture device (12), the control unit (14) being configured to carry out a method according to any of the claims 1 to 10.

13. Image capture system for acquiring a three dimensional image of a scene (S), comprising a control unit (14) according to claim 12 and an image capture device (12) with a sensor (20).

14. Image capture system according to claim 13, **characterized in that** the sensor (20) of the image capture device (12) comprises a plurality of hardware pixels (34), wherein one of the 2D pixel patterns (38, 46) covers all hardware pixels (34) of the sensor (20), a plurality of the hardware pixels (34) of the sensor (20) or only a single one of the hardware pixels (34) of the sensor (20).

15. Image capture system according to claim 13 or 14, **characterized in that** the image capture device (12) comprises an illumination unit (16) for illuminating the scene (S) with light, wherein the image capture device (12) is configured as a time-of-flight camera, in particular wherein the illumination unit (16) is configured to illuminate the scene (S) using a sequence of illumination patterns generating a sequence of exposure patterns at the sensor (20); and/or
that the image capture device (12) comprises a light modulation device (18), in particular a digital micromirror device or LCD-matrix, configured to partially or fully block light incoming from the scene (S) using a sequence of blocking patterns generating a sequence of exposure patterns at the sensor; and/or
that the sensor (20) acts as a light modulation device by combining the outputs of a plurality of its micropixels into a combined signal output constituting one hardware pixel, for effectively generating an exposure pattern, and by changing how the outputs of the plurality of its micropixels are combined for generating a sequence of exposure patterns.
